# EUROPEAN PATENT APPLICATION

(11) **EP 3 629 560 A1**
(43) Date of publication of application: **01.04.2020**
(21) Application number: 19194383.6
(22) Date of filing: 29.08.2019
(51) Int. Cl.: H04M 1/02, H04M 1/03, H04N 5/225, H04N 5/247

(54) **FULL SCREEN TERMINAL, AND OPERATION CONTROL METHOD AND DEVICE BASED ON FULL SCREEN TERMINAL**

(30) Priority: 30.09.2018 CN 201811157994
(71) Applicant: Beijing Xiaomi Mobile Software Co., Ltd., Beijing 100085 (CN)
(72) Inventor: YU, Tao, Beijing, 100085 (CN); HAN, Gaocai, Beijing, 100085 (CN); WANG, Yuwen, Beijing, 100085 (CN)
(74) Representative: Steinbauer, Florian

(57) **Abstract**

The present invention provides a terminal device with full screen, and a method and device for controlling the terminal device with full screen. The terminal device includes a housing having a front-facing camera; and a full screen having the same length and width as the housing, covering an upper surface of the housing, and having light transmission area corresponding to a position of the front-facing camera, wherein the light transmission area has display and light collecting functions.

## Description

### TECHNICAL FIELD

The present invention relates to the field of terminal technology, and more particularly, to a full screen terminal (terminal device), and an operation control method and device based on a full screen terminal.

### BACKGROUND

With the development of terminal technologies, the size of a terminal screen is larger and larger, and a high screen-ratio terminal is more popular. A full screen terminal, as the ultimate development of the high screen-ratio terminal, maximizes the screen-ratio of the terminal. The full screen terminal not only looks beautiful, but also has higher screen utilization, and can display more content on the screen. In addition, the full screen terminal brings a strong vision impact to the users, and thus greatly improves the user experience and has become the trend of the terminal.

Currently, most terminals have a front shooting function to meet user's needs. In order to realize this function, the terminal needs to be configured with a front-facing camera. However, the configuration of the front-facing camera becomes the key factor restricting the realization of the full screen terminal.

### SUMMARY

Aspects of the present invention provide a terminal device, and the device comprises:
a housing having a front-facing camera; and
a full screen having the same length and width as the housing, covering an upper surface of the housing, and having a light transmission area corresponding to a position of the front-facing camera, wherein the light transmission area has display and light collecting functions.

Optionally, the number of the light transmission area is the same as that of the front-facing camera.

Optionally, the full screen has one light transmission area; and the light transmission area is located in a center position of an upper edge of the full screen.

Optionally, the full screen has two light transmission areas; the two light transmission areas are arranged symmetrically about a vertical central line of the full screen and near an upper edge of the full screen; and a horizontal distance between each of the two light transmission areas and the vertical center line of the full screen is less than a preset value.

Optionally, the full screen has two light transmission areas; the two light transmission areas are arranged symmetrically about a vertical central line of the full screen and near an upper edge of the full screen; and a horizontal distance between each of the two light transmission areas and the vertical center line of the full screen is greater than a preset value.

Optionally, the terminal device further comprises an earpiece located in the housing and providing sounds through vibration.

Optionally, the terminal device further comprises an earpiece located in a gap between a frame of the housing and a frame of the full screen.

Aspects of the present invention provide a method for controlling operation of a terminal device, wherein the method is applied to the above terminal device, and the method comprises: acquiring a current operation mode of the terminal device;
determining a working state of a light transmission area located in a full screen of the terminal device according to the acquired current operation mode of the terminal device; and
performing an operation of the light transmission area according to the determined working state of the light transmission area.

Optionally, acquiring a current operation mode of the terminal device comprises: acquiring the current operation mode of the terminal device based on whether a front-facing camera, which is located on the upper surface of the housing, is turned on or off.

Optionally, determining a working state of a light transmission area according to the acquired current operation mode of the terminal device comprises:
determining a screen display state of the light transmission area when the front-facing camera is turned off and the acquired current operation mode of the terminal device is accordingly a display mode.

Optionally, performing an operation of the light transmission area according to the determined working state of the light transmission area comprises: the light transmission area displays content as a part of the full screen.

Optionally, determining a working state of a light transmission area according to the acquired current operation mode of the terminal device comprises:
determining a light collecting working state of the light transmission area when the front-facing camera is turned on and the acquired current operation mode of the terminal device is accordingly a camera shooting mode.

Optionally, performing an operation of the light transmission area according to the determined working state of the light transmission area comprises: collecting light refracted by an object in front of the front-facing camera through the light transmission area.

Aspects of the present invention provide an apparatus for controlling operation of a terminal device, wherein the apparatus is located in the above terminal device, and the apparatus comprises:
an acquisition module configured to acquire a current operation mode of the terminal device;
a determination module configured to determine a working state of a light transmission area located in a full screen of the terminal device according to the acquired current operation mode of the terminal device; and
a performing module configured to perform an operation of the light transmission area according to the determined working state of the light transmission area.

Optionally, the determination module is configured to determine that the light transmission area is in a screen display state when the acquired current operation mode of the terminal device is a display mode.

Optionally, the performing module is configured to display content on an area of the light transmission area.

Optionally, the determination module is configured to determine that the light transmission area is in a light collecting state when the acquired current operation mode of the terminal device is a camera shooting mode.

Optionally, the performing module is configured to collect light refracted by an object in front of a front-facing camera through the light transmission area.

Aspects of the present invention provide a non-transitory computer-readable storage medium having stored therein instructions that, when executed by a processor, causes the processor to perform a method according to the invention.

It is to be understood that both the foregoing general description and the following detailed description are exemplary and explanatory only and are not restrictive of the present invention.

### BRIEF DESCRIPTION OF THE DRAWINGS

The accompanying drawings, which are incorporated in and constitute a part of this description, illustrate embodiments consistent with the present invention and, together with the description, serve to explain the principles of the present invention.
Fig. 1 is a schematic diagram of a structure of a full screen terminal according to an exemplary embodiment;
Fig. 2 is a schematic diagram of a structure of a full screen terminal according to an exemplary embodiment;
Fig. 3 is a schematic diagram of a structure of a full screen terminal according to an exemplary embodiment;
Fig. 4 is a schematic diagram of a structure of a full screen terminal according to an exemplary embodiment;
Fig. 5 is a schematic diagram of a structure of a full screen terminal according to an exemplary embodiment;
Fig. 6 is a schematic diagram of a structure of a full screen terminal according to an exemplary embodiment;
Fig. 7 is a flow chart of an operation control method based on a full screen terminal according to an exemplary embodiment;
Fig. 8 is a flow chart of an operation control method based on a full screen terminal according to an exemplary embodiment;
Fig. 9 is a block diagram of an operation control device based on a full screen terminal according to an exemplary embodiment; and
Fig. 10 is a block diagram of an operation control device based on a full screen terminal according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present invention. Instead, they are merely examples of devices and methods consistent with aspects related to the invention as recited in the appended claims.

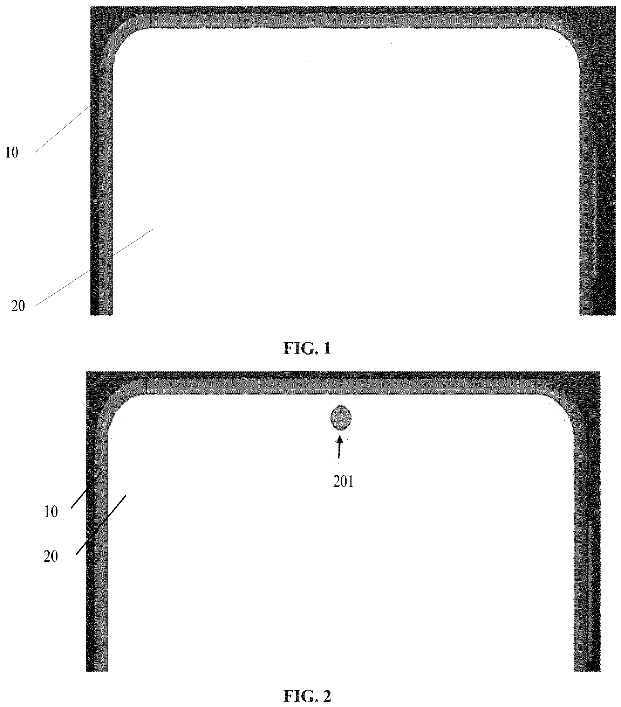

Embodiments of the present invention provide a full screen terminal. Referring to Fig. 1, the full screen terminal comprises a housing 10 and a full screen 20 having the same length and width as the housing 10. The full screen 20 can be an OLED (Organic Light-Emitting Diode) screen.

The full screen 20 covers an upper surface of the housing 10. A front-facing camera is arranged in the housing 10. That is, the front-facing camera is arranged under the full screen 20. A light transmission area 201 is formed in the full screen 20, a position of the light transmission area 201 is corresponding to a position of the front-facing camera, and the light transmission area 201 has display and light collecting functions. Area 201 has a circular shape in this embodiment.

In another embodiment of the present invention, the number of the light transmission areas 201 is the same as that of the front-facing cameras. In actual operation of use, the number of the front-facing camera(s) is generally one or two. Accordingly, when the number of the front-facing cameras is one, the number of the light transmission areas 201 is also one; and when the number of the front-facing cameras is two, the number of the light transmission areas 201 is also two.

In another embodiment of the present invention, as the position of the front-facing camera can be arbitrarily set according to requirements, and the front-facing camera corresponds to the light transmission area 201 in position, the light transmission area 201 can be formed in the full screen 20 at different positions in accordance with different positions of the front-facing camera in the housing 10.

For example, when there is one front-facing camera which is arranged on a surface of the housing 10 in contact with the full screen 20 and is located at the center of the upper edge of the housing 10, referring to Fig. 2, the number of the light transmission area 201 is one accordingly, and the light transmission area 201 is formed in the center of the upper edge of the full screen 20.

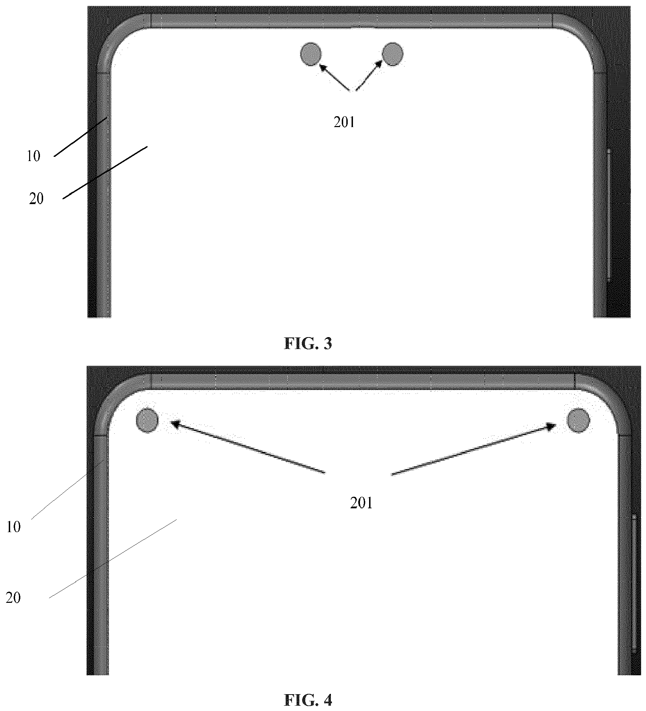

For example, when there are two front-facing cameras which are axisymmetrically arranged in the housing 10 and are close to the upper edge of the housing 10, and a distance between each front-facing camera and the vertical center line of the housing 10 is less than a preset value, referring to Fig. 3, the number of the light transmission areas 201 is two accordingly, the two light transmission areas 201 are also axisymmetrically formed in the upper edge of the full screen 20, and a distance between each transmission area 201 and the vertical center line of the full screen 20 is less than the preset value. The preset value can be set according to arrangement requirements of various components inside the full screen terminal, and can be 1 cm, 2 cm, or the like.

For example, when there are two front-facing cameras which are axisymmetrically arranged in the housing 10 and are close to the upper edge of the housing 10, and a distance between each front-facing camera and the vertical center line of the housing 10 is greater than a preset value, referring to Fig. 4, the number of the light transmission areas 201 is two accordingly, the two light transmission areas 201 are also axisymmetrically formed in the upper edge of the full screen 20, and a distance between each transmission area 201 and the vertical center line of the full screen 20 is greater than the preset value.

It should be noted that Figs. 2, 3, and 4 are only exemplary diagrams, and do not show all position relationships of the light transmission area 201 in the full screen 20. In actual design, all that is needed is to guarantee that the light transmission area 201 corresponds to the front-facing camera.

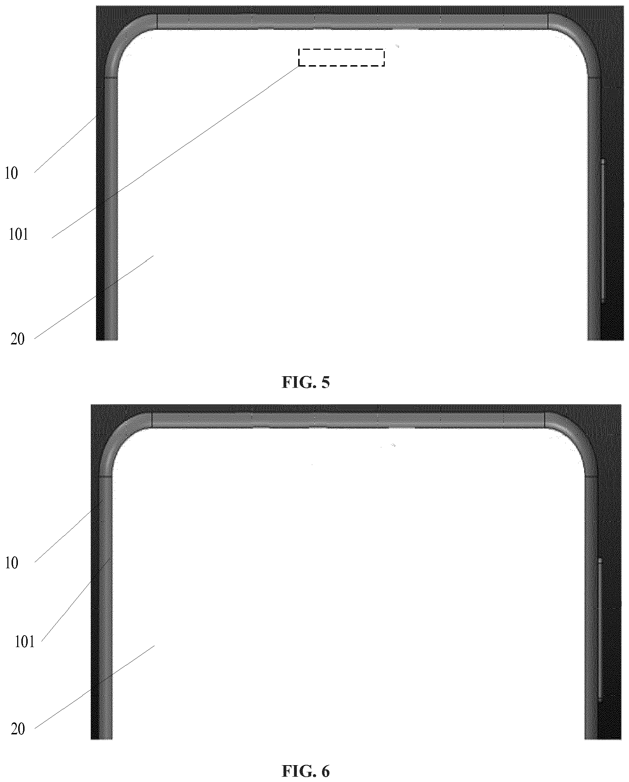

In another embodiment of the present invention, in order to ensure a communication function of the full screen terminal, the full screen terminal further comprises an earpiece 101. Referring to Fig. 5, the earpiece 101 can be arranged in the housing 10 (a dotted line portion in Fig. 5), and the earpiece 101 is capable of sounding through vibration.

In another embodiment of the present invention illustrated in Fig. 6, the full screen terminal further comprises an earpiece 101 arranged in a gap between a frame of the housing 10 and a frame of the full screen 20. The earpiece 101 produces sound through the gap between the housing 10 and the full screen 20.

In another embodiment of the present invention, the full screen terminal can further comprise a power button, a microphone, a volume adjustment button, and the like through which the normal use of the full screen terminal is ensured, and thus, the full screen terminal is fully functional.

According to the full screen terminal provided by the embodiment of the present invention, the front-facing camera is arranged under the full screen 20; and the light transmission area 201 corresponding to the front-facing camera is configured for collecting light, so that not only the full screen of the terminal is realized, but also a front shooting function is realized by capturing an image will be shot based on light collected through the light transmission area 201 in a camera shooting mode.

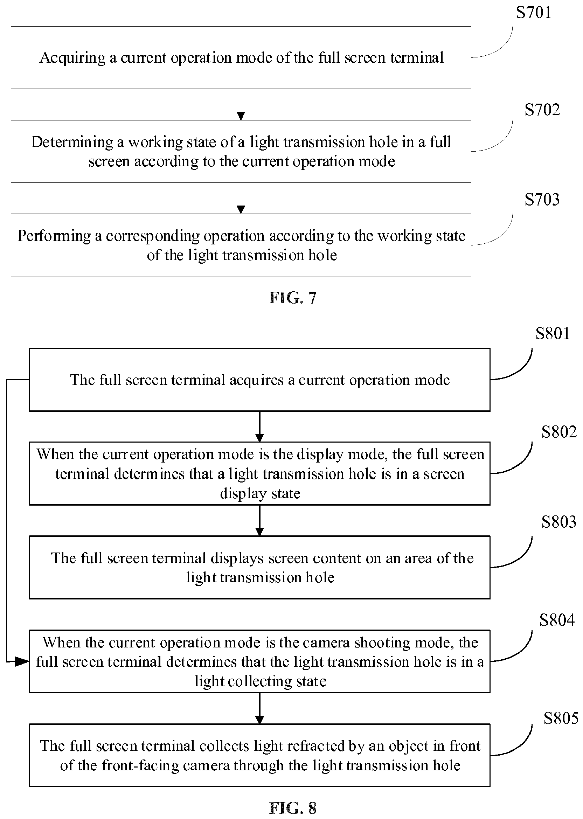

Fig. 7 is a flow chart of an operation control method based on a full screen terminal according to an exemplary embodiment. As shown in Fig. 7, the method is applied to any of the full screen terminals described in Fig. 1 to Fig. 6, and includes following steps.

In step S701, a current operation mode of the full screen terminal is acquired.

In step S702, a working state of a light transmission area in a full screen is determined according to the current operation mode.

In step S703, a corresponding operation is performed according to the working state of the light transmission area.

According to the method provided by the embodiment of the present invention, a working state of the light transmission area is determined according to the current operation mode of the full screen terminal; and different operations are performed based on the working state of the light transmission area, so that the user experiences are excellent in different operation modes.

In another embodiment of the present invention, determining the working state of the light transmission area in the full screen according to the current operation mode comprises:
when the current operation mode is a display mode, determining that the light transmission area is in a screen display state.

In another embodiment of the present invention, performing the corresponding operation according to the working state of the light transmission area comprises:
displaying screen content on an area of the light transmission area.

In another embodiment of the present invention, determining the working state of the light transmission area in the full screen according to the current operation mode comprises:
when the current operation mode is a camera shooting mode, determining that the light transmission area is in a light collecting state.

In another embodiment of the present invention, performing the corresponding operation according to the working state of the light transmission area comprises:
collecting light refracted by an object in front of a front-facing camera through the light transmission area.

All of the selectable technique solutions described above, can be selected in any combination to form alternative embodiments of the present invention, and will not be described again herein.

Fig. 8 is a flow chart of an operation control method based on a full screen terminal according to an exemplary embodiment. As shown in Fig. 8, the method is applied to the full screen terminal described in any of Figs. 1-6, and comprises the following steps.

In step S801, the full screen terminal acquires a current operation mode.

The operation mode comprises a display mode, a camera shooting mode, and the like. In a running process of the full screen terminal, the full screen terminal can acquire the current operation mode thereof according to whether a front-facing camera is turned on. When the front-facing camera is turned on, it is determined that the full screen terminal is in the camera shooting mode. When the front-facing camera is turned off, it is determined that the full screen terminal is in the display mode.

In step S802, when the current operation mode is the display mode, the full screen terminal determines that a light transmission area is in a screen display state, and step S803 will be performed.

When it is determined that the full screen terminal is in the display mode, in order to improve a display effect and bring a better visual experience to a user, the full screen terminal can determine that the light transmission area is in the screen display state according to the condition that the current operation mode is the display mode, so that step S803 will be performed in the screen display state to realize a display function of the full screen terminal.

In step S803, the full screen terminal displays screen content on the light transmission area..

When the light transmission area is in the screen display state, the light transmission area on the full screen has the same function as other areas on the full screen, and is configured for displaying the screen content. Therefore, the full screen terminal can display the screen content on the area of the light transmission area. As the whole screen is configured for displaying the screen content, the display of the screen content is smoother, and image distortion and distortion are avoided. Therefore, a display effect is better.

In step S804, when the current operation mode is the camera shooting mode, the full screen terminal determines that the light transmission area is in a light collecting state, and step S805 will be performed.

When it is determined that the full screen terminal is in the camera shooting mode, in order to realize the front shooting function, the full screen terminal can determine that the light transmission area is in the light collecting state according to the condition that the current operation mode is the camera shooting mode, so that step S805 will be performed in the light collecting state to realize the light collecting function of the full screen terminal.

In step S805, the full screen terminal collects light refracted by an object in front of the front-facing camera through the light transmission area.

When the light transmission area is in the light collecting state, it is equivalent to a lens for transmitting the light refracted by the object in front of the front-facing camera, and the full screen terminal captures an image of the object in front of the front-facing camera by collecting the light transmitted by the light transmission area, so as to realize the front shooting function.

According to the method provided by the embodiment of the present invention, a working state of the light transmission area is determined according to the current operation mode of the full screen terminal; and different operations are performed based on the working state of the light transmission area, so that the user experiences are excellent in different operation modes.

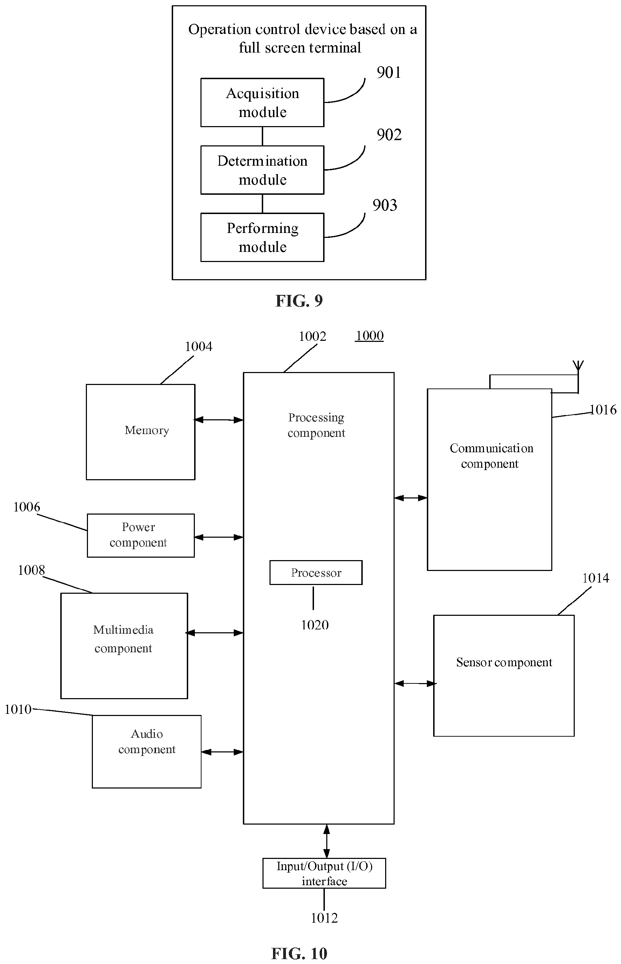

Fig. 9 is a block diagram of an operation control device based on a full screen terminal according to an exemplary embodiment. The device is arranged in a full screen terminal and includes: an acquisition module 901, a determination module 902 and a performing module 903.

The acquisition module 901 is configured to acquire a current operation mode of the full screen terminal.

The determination module 902 is configured to determine a working state of a light transmission area in a full screen according to the current operation mode.

The performing module 903 is configured to perform a corresponding operation according to the working state of the light transmission area.

In another embodiment of the present invention, the determination module 902 is configured to determine that the light transmission area is in a screen display state when the current operation mode is a display mode.

In another embodiment of the present invention, the performing module 903 is configured to display screen content on an area of the light transmission area.

In another embodiment of the present invention, the determination module 902 is configured to determine that the light transmission area is in a light collecting state when the current operation mode is a camera shooting mode.

In another embodiment of the present invention, the performing module 903 is configured to collect light refracted by an object in front of a front-facing camera through the light transmission area.

According to the device provided by the embodiment of the present invention, a working state of the light transmission area is determined according to the current operation mode of the full screen terminal; and different operations are performed based on the working state of the light transmission area, so that the user experiences are excellent in different operation modes.

With respect to the device of the above embodiment, the specific method of operation performed by each module has been described in details in the embodiment of the method, and the description thereof will not be described in details herein.

Fig. 10 is a block diagram of an operation control device 1000 based on a full screen terminal according to an exemplary embodiment. For example, the device 1000 may be a mobile phone, a computer, a digital broadcast terminal, a messaging device, a gaming console, a tablet device, a medical device, a fitness equipment, a personal digital assistant, and the like.

Referring to Fig. 10, the device 1000 can include one or more of the following components: a processing component 1002, a memory 1004, a power component 1006, a multimedia component 1008, an audio component 1010, an input/output (I/O) interface 1012, a sensor component 1014, and a communication component 1016.

The processing component 1002 generally controls the overall operations of the device 1000, such as the operations associated with display, telephone calls, data communications, camera operations, and recording operations. The processing component 1002 can include one or more processors 1020 to execute instructions to perform all or part of the steps in the above described methods. Moreover, the processing component 1002 can include one or more modules which facilitate the interaction between the processing component 1002 and other components. For instance, the processing component 1002 can include a multimedia module to facilitate the interaction between the multimedia component 1008 and the processing component 1002.

The memory 1004 is configured to store various types of data to support the operation of the device 1000. Examples of such data include instructions for any applications or methods operated on the device 1000, contact data, phonebook data, messages, pictures, videos, etc. The memory 1004 can be implemented by using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1006 provides power to various components of the device 1000. The power component 1006 can include a power management system, one or more power sources, and any other components associated with the generation, management, and distribution of power in the device 1000.

The multimedia component 1008 includes a screen providing an output interface between the device 1000 and the user. In some embodiments, the screen can include a liquid crystal display (LCD) and a touch panel (TP). When the screen includes the touch panel, the screen can be implemented as a touch screen to receive input signals from the user. The touch panel includes one or more touch sensors to sense touches, swipes, and gestures on the touch panel. The touch sensors can not only sense a boundary of a touch or swipe action, but also sense the duration and pressure associated with the touch or swipe action. In some embodiments, the multimedia component 1008 includes a front-facing camera and/or a rear-facing camera. The front-facing camera and the rear-facing camera can receive external multimedia data while the device 1000 is in an operation mode, such as a photographing mode or a video mode. Each of the front-facing camera and the rear-facing camera can be a fixed optical lens system or have focus and optical zoom capability.

The audio component 1010 is configured to output and/or input audio signals. For example, the audio component 1010 includes a microphone (MIC) configured to receive external audio signals when the device 1000 is in an operation mode, such as a call mode, a recording mode, and a voice recognition mode. The received audio signal can be further stored in the memory 1004 or transmitted via the communication component 1016. In some embodiments, the audio component 1010 further includes a speaker for outputting audio signals.

The I/O interface 1012 provides an interface between the processing component 1002 and peripheral interface modules, such as a keyboard, a click wheel, buttons, and the like. The buttons can include, but are not limited to, a home button, a volume button, a start button, and a lock button.

The sensor component 1014 includes one or more sensors to provide status assessments of various aspects of the device 1000. For instance, the sensor component 1014 can detect an on/off status of the device 1000, relative positioning of components, e.g., the display device and the mini keyboard of the device 1000, and the sensor component 1014 can also detect a position change of the device 1000 or a component of the device 1000, presence or absence of user contact with the device 1000, orientation or acceleration/deceleration of the device 1000, and temperature change of the device 1000. The sensor component 1014 can include a proximity sensor configured to detect the presence of nearby objects without any physical contact. The sensor component 1014 can also include a light sensor, such as a CMOS or CCD image sensor, used for imaging applications. In some embodiments, the sensor component 1014 can also include an accelerometer sensor, a gyroscope sensor, a magnetic sensor, a pressure sensor, or a temperature sensor.

The communication component 1016 is configured to facilitate communication, wired or wirelessly, between the device 1000 and other devices. The device 1000 can access a wireless network based on a communication standard, such as WiFi, 2G, or 3G, or a combination thereof. In an exemplary embodiment, the communication component 1016 receives broadcast signals or broadcast associated information from an external broadcast management system via a broadcast channel. In an exemplary embodiment, the communication component 1016 further includes a near field communication (NFC) module to facilitate short-range communications.

In exemplary embodiments, the device 1000 can be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, a non-transitory computer-readable storage medium including instructions is also provided, such as the memory 1004 including instructions, executable by the processor 1020 in the device 1000, for performing the above-described methods. For example, the non-transitory computer-readable storage medium may be a ROM, a RAM, a CD-ROM, a magnetic tape, a floppy disc, an optical data storage device, and the like.

There is provided a non-transitory computer-readable storage medium that, when instructions in the storage medium are executed by a processor of a mobile terminal, cause the mobile terminal to implement the operation control method based on a full screen terminal.

According to the device provided by the embodiment of the present invention, a working state of the light transmission area is determined according to the current operation mode of the full screen terminal; and different operations are performed based on the working state of the light transmission area, so that the user experiences are excellent in different operation modes.

Other embodiments of the present invention will be apparent to those skilled in the art from consideration of the specification and practice of the present invention. This application is intended to cover any variations, uses, or adaptations of the present invention following the general principles thereof and including common knowledge or commonly used technical measures which are not disclosed herein. The specification and embodiments are to be considered as exemplary only, with a true scope and spirit of the present invention is indicated by the following claims.

It will be appreciated that the present invention is not limited to the exact construction that has been described above and illustrated in the accompanying drawings, and that various modifications and changes can be made without departing from the scope thereof. It is intended that the scope of the present invention only be limited by the appended claims.

## Claims

1. A terminal device, comprising:
a housing (10) having a front-facing camera; and
a full screen (20) having the same length and width as the housing (10), covering an upper surface of the housing (10), and having light transmission area (201) corresponding to a position of the front-facing camera, wherein the light transmission area (201) has display and light collecting functions.

2. The terminal device of claim 1, wherein number of the light transmission area (201) is the same as that of the front-facing camera.

3. The terminal device of claim 1 or 2, wherein the full screen (20) has one light transmission area (201); and the light transmission area (201) is located in a center position of an upper edge of the full screen (20).

4. The terminal device of any one of the preceding claims, wherein the full screen (20) has two light transmission areas (201); the two light transmission areas (201) are arranged symmetrically about a vertical central line of the full screen (20) and near an upper edge of the full screen (20); and a horizontal distance between each of the two light transmission areas (201) and the vertical center line of the full screen (20) is less than a preset value.

5. The terminal device of of any one of the preceding claims, wherein the full screen (20) has two light transmission areas (201); the two light transmission areas (201) are arranged symmetrically about a vertical central line of the full screen (20) and near an upper edge of the full screen (20); and a horizontal distance between each of the two light transmission areas (201) and the vertical center line of the full screen (20) is greater than a preset value.

6. The terminal device of of any one of the preceding claims, further comprising an earpiece (101) located in the housing (10) and providing sounds through vibration.

7. The terminal device of of any one of the preceding claims, further comprising an earpiece (101) located in a gap between a frame of the housing (10) and a frame of the full screen (20).

8. A method for controlling operation of a terminal device, wherein the method is applied to the terminal device of any one of the preceding claims, and the method comprises:
acquiring (701; 801) a current operation mode of the terminal device;
determining (702) a working state of a light transmission area located in a full screen of the terminal device according to the acquired current operation mode of the terminal device; and
performing (703) an operation of the light transmission area according to the determined working state of the light transmission area.

9. The method of claim 8, wherein acquiring a current operation mode of the terminal device comprises:
acquiring the current operation mode of the terminal device based on whether a front-facing camera, which is located on the upper surface of the housing, is turned on or off.

10. The method of claim 8 or 9, wherein determining a working state of a light transmission area according to the acquired current operation mode of the terminal device comprises:
determining (802) a screen display state of the light transmission area when the front-facing camera is turned off and the acquired current operation mode of the terminal device is accordingly a display mode; and
wherein performing an operation of the light transmission area according to the determined working state of the light transmission area comprises: the light transmission area displaying (803) content as a part of the full screen.

11. The method of any one of claims 8 to 10, wherein determining a working state of a light transmission area according to the acquired current operation mode of the terminal device comprises:
determining (804) a light collecting state of the light transmission area when the front-facing camera is turned on and the acquired current operation mode of the terminal device is accordingly a camera shooting mode; and
wherein performing an operation of the light transmission area according to the determined working state of the light transmission area comprises: collecting (805) light refracted by an object in front of the front-facing camera through the light transmission area.

12. An apparatus for controlling operation of a terminal device, wherein the apparatus is located in the terminal device according to any of claims 1-7, and the apparatus comprises:
an acquisition module (901) configured to acquire a current operation mode of the terminal device;
a determination module (902) configured to determine a working state of a light transmission area located in a full screen of the terminal device according to the acquired current operation mode of the terminal device; and
a performing module (903) configured to perform an operation of the light transmission area according to the determined working state of the light transmission area.

13. The apparatus according to claim 12, wherein the determination module (902) is configured to determine that the light transmission area is in a screen display state when the acquired current operation mode of the terminal device is a display mode; and
wherein the performing module (903) is configured to display content on an area of the light transmission area.

14. The apparatus according to claim 12 or 13, wherein the determination module (902) is configured to determine that the light transmission area is in a light collecting state when the acquired current operation mode of the terminal device is a camera shooting mode; and
wherein the performing module (903) is configured to collect light refracted by an object in front of a front-facing camera through the light transmission area.

15. A non-transitory computer-readable storage medium having stored therein instructions that, when executed by a processor, causes the processor to perform a method according to any one of claims 8 to 11.
